# EUROPEAN PATENT APPLICATION

(11) **EP 4 464 617 A1**
(43) Date of publication of application: **20.11.2024**
(21) Application number: 24173276.7
(22) Date of filing: 30.04.2024
(51) Int. Cl.: B65D 19/44, B65D 85/66, B65D 85/67, B65G 57/00

(54) **SECONDARY SUPPORT FOR CYLINDRICAL OBJECTS AND RETAINING DEVICE**

(30) Priority: 12.05.2023 IT 202300009534
(71) Applicant: Roll S.n.c. di Pini Sergio & C., 22070 Bregnano (COMO) (IT)
(72) Inventor: PINI, Sergio, I-22070 Bregnano (COMO) (IT)
(74) Representative: Long, Giorgio

(57) **Abstract**

The present invention relates to a system for holding reels or other cylindrical objects. In particular, the invention regards a secondary support (1, 101) for cylindrical objects (B), comprising at least two retaining devices (10, 110) each comprising at least one wedge element (2, 102) comprising at least a first inclined surface (3, 103) and at least one second surface (4, 104), opposite to said at least one first inclined surface (3, 103), wherein the at least one second surface (4, 104) includes at least one toothing (5, 105). The stop device (10, 110) includes at least one opening (6, 106), wherein the secondary support (1, 101) includes at least one connecting element (7, 107) which develops along a longitudinal axis (X-X) and has a first and a second end (8, 108; 9, 109), said first (8, 108) and second end (9, 109) being configured and shaped to fit into said at least one opening (6, 106) of the at least one stop device (10, 110). Said connecting element (7, 107) is made of a material of lower hardness than the hardness of the material in which the at least two stop devices (10, 110) are made.

## Description

There present invention relates to a system for holding reels or other cylindrical objects.

The industrial storage and handling of cylindrical objects presents significant problems. A typical, non-exclusive example of such objects consists of reels of tapes, sheets or films in the most varied materials, such as paper, plastic, metal, fabric, etc. Other cylindrical objects are, for example, tanks or containers of various types and use. These cylindrical objects can be of the most varied dimensions, both in terms of diameter and length of the cylinder.

The industrial storage and handling of cylindrical objects normally requires two types of supports, a primary support and a secondary support.

The primary support consists of a base structure which can be made of various materials, such as metal, plastic or wood. Wooden pallets are typical. These structures must support the weight of the objects loaded on them both in static conditions (storage) and in dynamic conditions (handling). For example, wooden pallets are structured so as to have spaces underneath the floor, so as to allow the introduction of forklift forks. It is clear that the primary supports described must be of various sizes, so as to be able to accommodate cylindrical objects of the most varied sizes.

The primary support described above is, however, not sufficient to keep cylindrical objects stably on the support itself. By their very nature, such objects will tend to roll. It is also convenient to be able to arrange the objects stacked on overlapping levels, in order to use the same primary support for a large number of objects.

To this end, secondary supports are normally used which include retaining systems such as wedges, saddles or slats made of various materials, such as wood, cardboard, cellulose pulp, expanded polystyrene, metal, etc.

However, known secondary supports present various critical issues, such as: poor resistance to impacts and atmospheric agents, poor safety guarantee (use of nails, fragile couplings) and, above all, poor or no adaptability to different dimensions of the cylindrical object.

It is important that the secondary support is easily adaptable not only to the different diameters of the cylindrical object to be supported, but also to the different sizes of the primary support on which the objects are placed. This constitutes a problem that has not yet been solved.

Such problem it was instead solved by the inventor of the present patent application by means of a secondary support comprising a stop device as outlined in annexed claims, whose definitions form integral part of the present description.

An object of the invention is therefore a secondary support for cylindrical objects, such as reels, containers or tanks, placed on a primary support such as a pallet, as defined in claims 1 to 13.

A further object of the invention is a device for holding cylindrical objects, such as reels, containers or tanks, as defined in claim 14.

Further features and advantages of the present invention will result more clearly from the description of some examples of implementation, given below for indicative and non-limiting purposes, with reference to the following figures:
Figure 1 represents a perspective view from above of a stop device according to the invention;
Figure 2A represents a perspective view from below of the stop device of figure 1;
Figure 2B represents a perspective view from below of the stop device of figure 1 according to an constructional variant;
Figure 3 represents a plan view from below of the stop device of figure 1;
Figure 4 represents a view according to direction A of figure 1 of the stop device of figure 1;
Figures 5A and 5B represent side views from opposite sides of the stop device of figure 1;
Figure 6 represents a perspective view of a first embodiment of the secondary support according to the invention during assembly;
Figure 7 represents a perspective view from below of a detail of the secondary support of figure 6;
Figures 8A and 8B represent perspective views of an example of use of the secondary support of figure 6;
Figure 9 represents a perspective view from above of two assembled stop devices of figure 1;
Figure 10 represents a perspective view of a second embodiment of the secondary support according to the invention during assembly;
Figure 11 represents an enlarged detail of the perspective view of figure 10;
Figure 12 represents a sectional side view of a portion of the secondary support of figure 10 in the assembled condition;
Figure 13 represents a perspective view of a stop device for the secondary support of figure 10;
Figure 14 represents a front view of the stop device of figure 13;
Figure 15 represents a perspective view of a detail of the secondary support of figure 10 in use condition.

With reference at figures, the secondary support according to the invention, indicated as a whole with the number 1, 101, includes at least two stop devices 10, 110 each comprising at least one wedge element 2, 102 which includes at least a first inclined surface 3, 103 and at least one second surface 4, 104, opposite to said at least one first inclined surface 3, 103, in which the at least one second surface 4, 104 includes at least one toothing 5, 105, characterized in that the stop device 10, 110 includes at least one opening 6, 106 and by the fact that the secondary support 1, 101 includes at least one connecting element 7, 107 which develops along a longitudinal axis X-X and has a first and a second end 8, 108 and 9, 109, said first 8, 108 and second ends 9, 109 being configured and shaped to fit into said at least one opening 6, 106 of the at least one stop device 10, 110 and by the fact that said connecting element 7, 107 is made of a material of lower hardness than the hardness of the material in which the at least two stop devices 10, 110 are made.

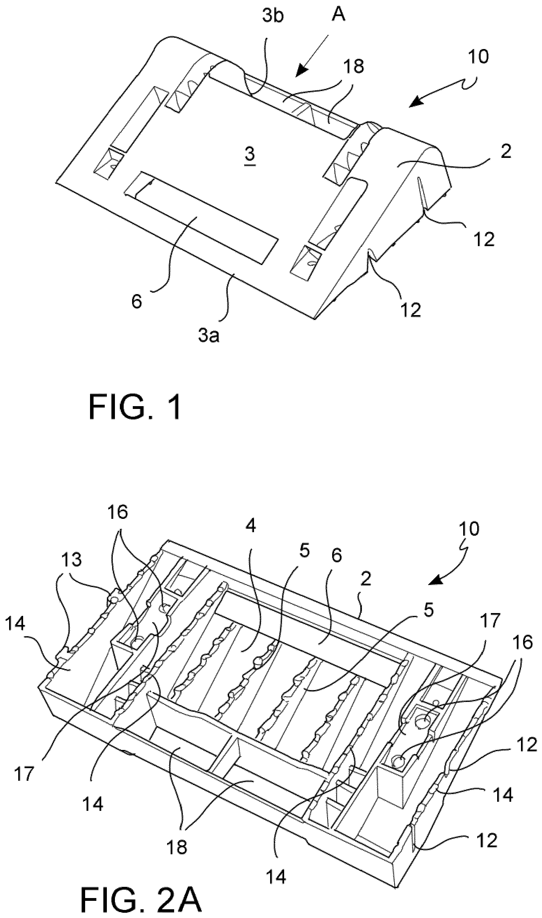

A first embodiment of the secondary support 1 of the invention is shown in figures 1-9.

According to this embodiment, the inclined surface 3 of the stop device 10 includes a tip end 3a, which corresponds to the front edge of the wedge-shaped element 2, and a rear end 3b, which corresponds to the rear edge of the wedge-shaped element 2.

By "front edge" of the wedge-shaped element 2 we mean the edge corresponding to the point of smallest thickness of the wedge and by "rear edge" of the wedge-shaped element 2 we mean the upper edge located at the point of greatest thickness of the wedge.

The stop device 10 includes said opening 6 in the form of a slit which opens at or in a position adjacent to said tip end 3a of the inclined surface 3, said slit extending in a transversal direction with respect to the axis X-X along which the connecting element 7 is introduced.

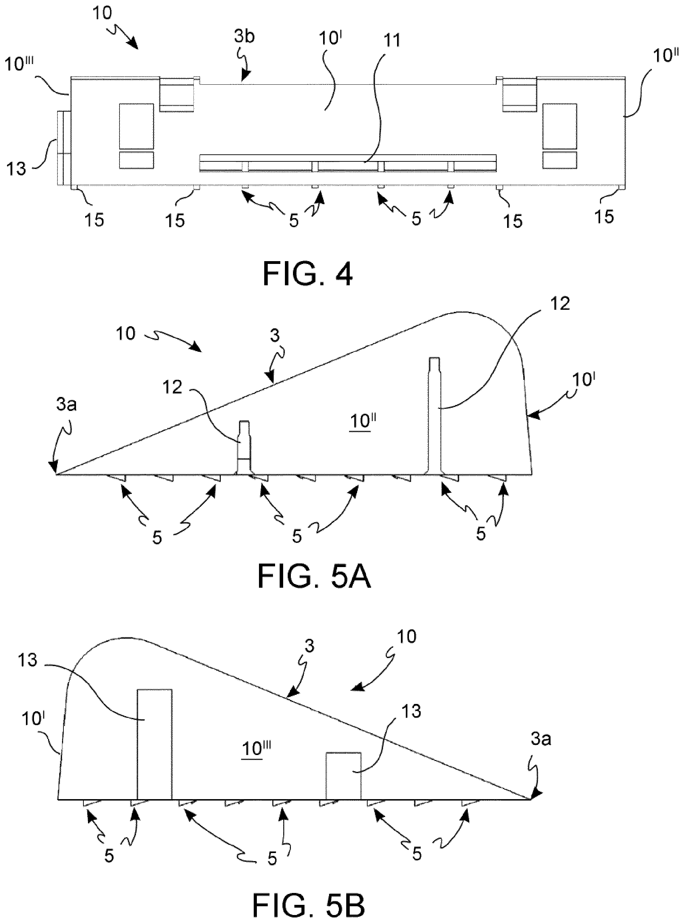

The stop device 10 further comprises a rear surface 10', a first lateral surface 10" and a second lateral surface 10‴. As shown in figure 4, the rear surface 10' includes a second slot 11 for the possible escape of the connecting element 7 introduced through the opening 6.

In preferred embodiments, the at least one toothing 5 comprises a plurality of teeth in the shape of a right triangle, hereinafter defined as shark-tooth toothing.

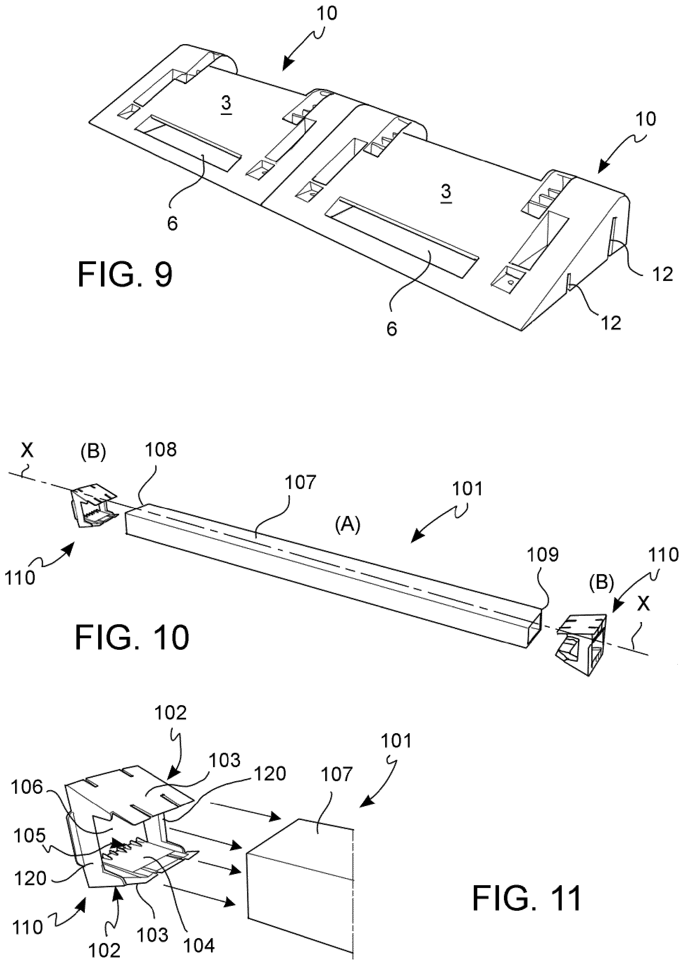

In certain embodiments, the first lateral surface 10" includes notches 12 arranged vertically, i.e. along directions perpendicular to a base plane of the stop device 10, while the second lateral surface 10‴ includes ribs 13 arranged in position such, configured and sized in such a way that the ribs 13 of a stop device 10 can be coupled by interlocking with the recesses 12 of a second stop device 10 so as to create a modular structure, as shown in figure 9. Preferably, the ribs 13 have a T-section and the recesses 12 are open downwards (as in the drawings) or upwards, so that the insertion of the ribs 13 occurs along a vertical direction and thus a more stable coupling is achieved as the T shape does not allow release along a direction parallel to the support surface.

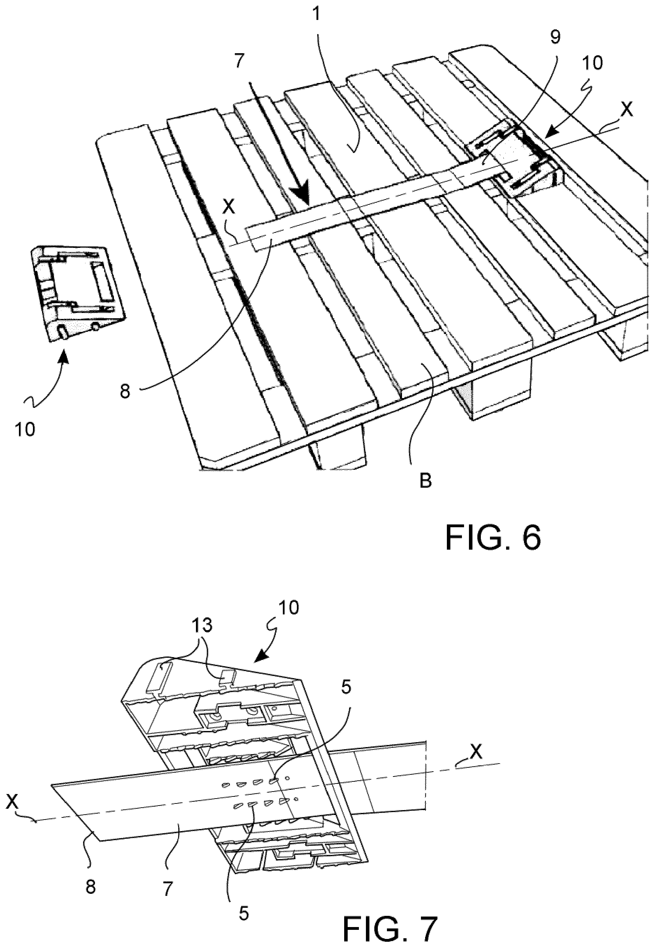

In certain embodiments, the second surface 4 of the stop device 10, which constitutes the lower surface facing the base or support surface of the device, includes a plurality of ribs 14, on each of which a plurality of teeth 15 is arranged, which facilitate gripping to a base surface on which the stop device 10 is arranged, for example a pallet B as shown in figure 6 or in figures (6 or 8A-8B).

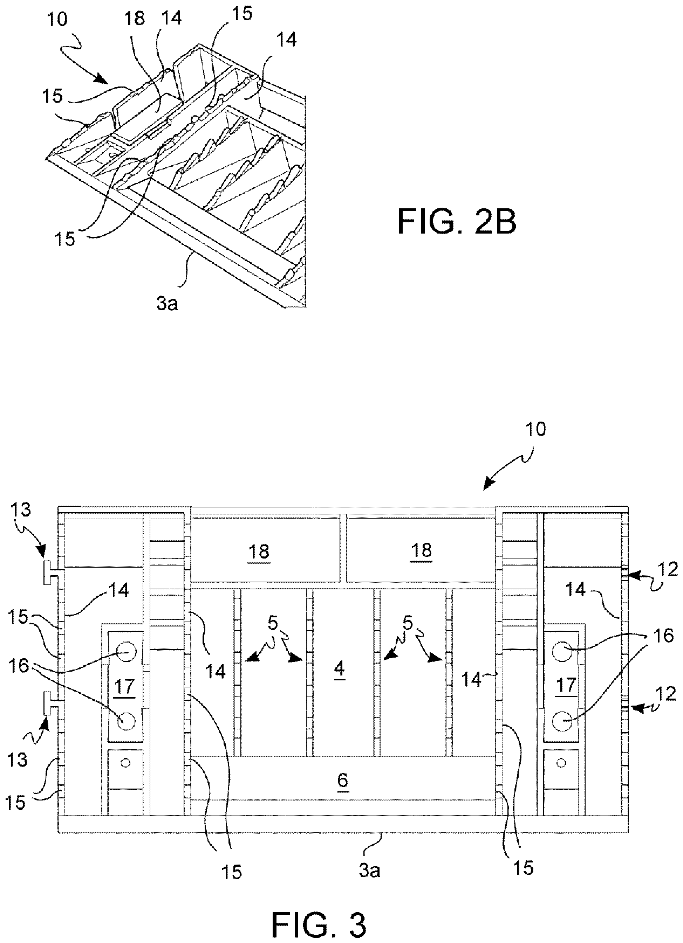

The stop device 10 can also include, in certain embodiments, through holes 16 arranged in suitable seats 17 which extend from the second surface 4 of the device, in order to allow fixing by screwing the retaining device 10 onto a support surface, for example that of a pallet. Additionally or alternatively, as shown in Figure 2B, the seat 17 can include a high grip insert 18 (for example, a rubber insert).

In certain embodiments, the stop device 10 includes one or more openings 18 or recesses at the rear end 3b of the inclined surface 3, so as to act as handles for gripping the stop device 10 during use.

The connecting element 7 has the shape of a strip or ribbon and is made of a material whose hardness is lower than the hardness of the material in which the stop device 10 is made, which is for example polypropylene. By way of example, the connecting element 7 is made of plastic material, foamed or non-foamed, rubber, cardboard or similar. In any case, this material must have such a hardness as to allow at least one toothing 5 of the stop device 10 to penetrate the material of the connecting element 7 as shown in figure 7 so as to mutually fix the two elements.

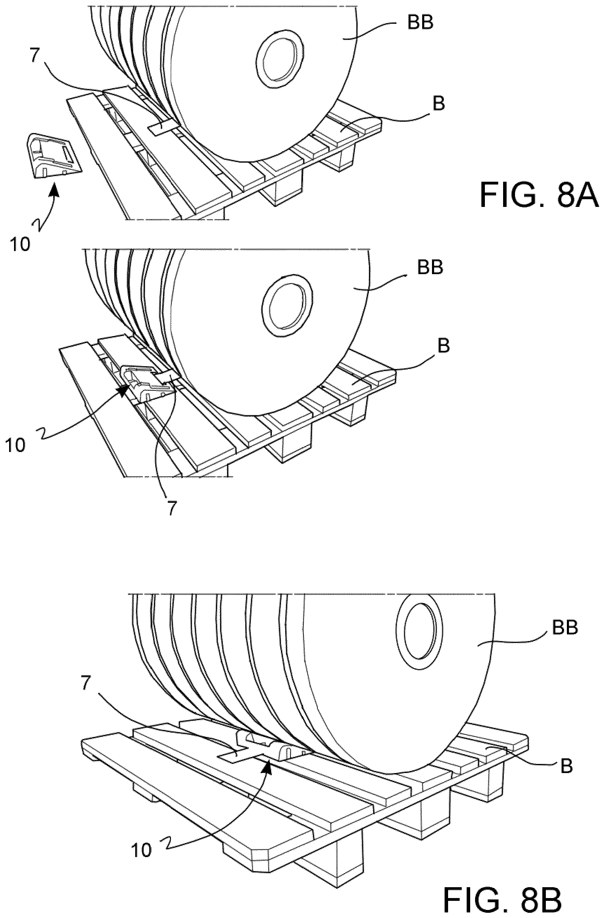

Figures 6, 8A and 8B show the secondary support 1 of the invention during its use.

After having arranged the connecting element 7 with a first stop device 10 inserted at one end on a surface, for example a pallet B (figure 6), the cylindrical object to be stopped, for example a coil BB, is placed on pallet B above the connection element 7 and resting on the first stop device 10. Then (figures 8A-8B) the second stop device 10 is inserted at the other end of the connection element 7, up to the point in which the wedge-shaped element 2 abuts and is partially inserted under the cylindrical object. At this point, the weight of the cylindrical object itself crushes the stop device 10 against the connecting element 7, so that the teeth 5 penetrate it, creating a stable coupling.

When you want to extract the stop device 10, it will be sufficient to lift the rear end, so as to release the teeth 5, and slide it along the connection element to remove it or reposition it.

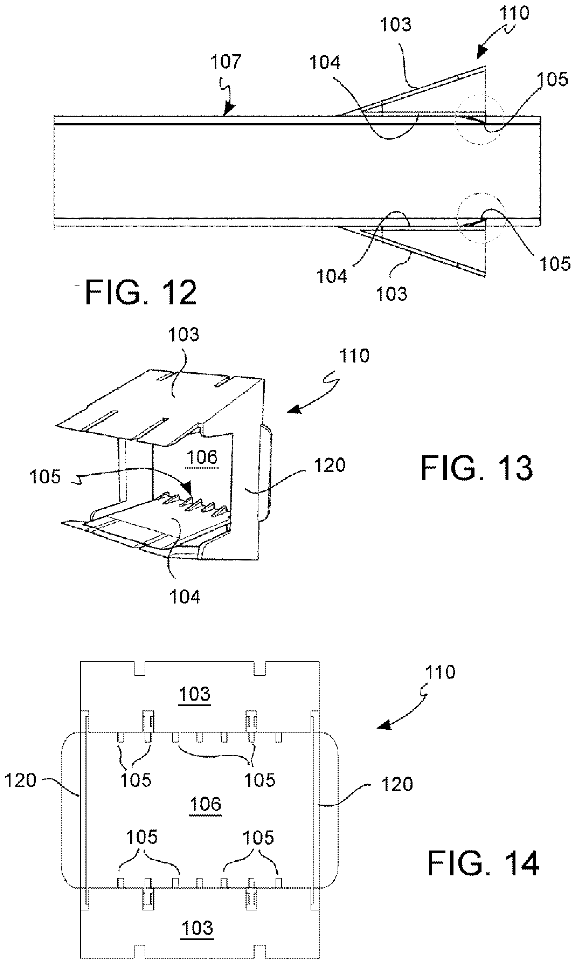

Figures 10-15 show a different embodiment of the secondary support 101, which can be used for stacking cylindrical objects on top of each other.

According to this embodiment, the stop device 110 includes two wedge-shaped elements 102 having converging inclined surfaces 103, the two wedge-shaped elements being separated by lateral edges 120 so as to define, between said wedge-shaped elements 102, an opening 106 configured for the insertion of the connection element 107.

The wedge-shaped elements 102 comprise respective second surfaces 104, facing each other and separated by said opening 106, which include a toothing 105 which, preferably, is shaped like shark teeth. These teeth 105 are arranged transversally with respect to the axis X-X of insertion of the connecting element 107.

The connecting element 107 is formed by a tubular element with a square or rectangular section, sized so as to fit into the opening 106 of the stop devices 110 and made of a soft plastic, expanded or non-expanded, or of cardboard. Preferably, the connecting element 107 is made of cardboard.

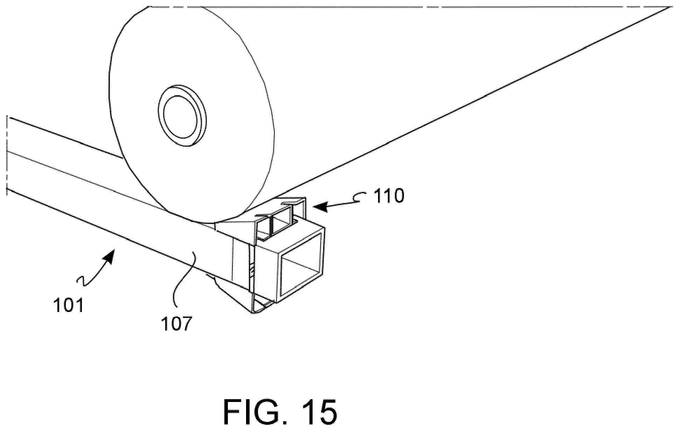

As shown in figure 15, the method of use of the secondary support 101 is similar to that of the secondary support 1 previously described. The double wedge element 102 allows the secondary support 101 to be arranged between two or more stacked cylindrical objects.

In both embodiments described above, the inclined surfaces 3, 103 have an angle of inclination, with respect to the X-X axis of the connecting element 7, 107, less than 45°, so as to unload part of the weight component of the cylindrical object on the stop device 10, 110.

The advantages of the secondary support 1, 101 according to the invention are as follows.

First of all, this secondary support is universal, not depending on the diameter of the cylindrical objects to be positioned.

Furthermore, the stop device 10, 110 hooks onto the connecting element 7, 107 without the aid of nails, glue or staples, but only uses friction and penetration of the teeth 5, 105 into the connecting element 7, 107 in material of lower hardness.

Finally, the materials from which the secondary support of the invention is made are of limited cost, easily recyclable and of reduced weight.

It is evident that only some particular embodiments of the present invention have been described, to which the expert in the art will be able to make all those modifications necessary for its adaptation to particular applications, without however departing from the scope of protection of the present invention.

## Claims

1. A secondary support (1, 101) for cylindrical objects (B), comprising at least two stop devices (10, 110) each comprising at least one wedge-shaped element (2, 102) comprising at least a first inclined surface (3, 103) and at least one second surface (4, 104), opposite to said at least one first inclined surface (3, 103), wherein the at least one second surface (4, 104) includes at least one toothing (5, 105), **characterized in that** the stop device (10, 110) includes at least one opening (6, 106) **and in that** the secondary support (1, 101) includes at least one connecting element (7, 107) which develops along a longitudinal axis (X-X) and has a first and a second end (8, 108; 9, 109), said first (8, 108) and second end (9, 109) being configured and shaped to fit into said at least one opening (6, 106) of the at least one stop device (1, 101) **and in that** said connecting element (7, 107) is made of a material of lower hardness than the hardness of the material in which the at least two stop devices (10, 110) are made.

2. The secondary support (1, 101) according to claim 1, wherein the at least one toothing (5, 105) comprises a plurality of teeth in the shape of a right triangle or shark tooth.

3. The secondary support (1, 101) according to claim 1 or 2, wherein the inclined surfaces (3, 103) have an angle of inclination, with respect to the axis (X-X) of the connecting element (7, 107), less than 45°.

4. The secondary support (1) according to any one of claims 1 to 3, wherein the inclined surface (3) of the stop device (10) includes a tip end (3a), which corresponds to the front edge of the wedge-shaped element (2), and a rear end (3b), which corresponds to the rear edge of the wedge-shaped element (2) and in which the stop device (10) includes said opening (6) in the form of a slit which opens at or in a position adjacent to said tip end (3a) of the inclined surface (3), said slot extending in a transversal direction with respect to the axis (X-X) along which the connecting element (7) is introduced.

5. The secondary support (1) according to any one of claims 1 to 4, wherein the stop device (10) comprises a rear surface (10'), a first lateral surface (10") and a second lateral surface (10‴), the rear surface (10') including a second slot (11) for the possible exit of the connecting element (7) introduced through the opening (6).

6. The secondary support (1) according to claim 5, wherein the first lateral surface (10") includes recesses (12) arranged vertically, i.e. along directions perpendicular to a base plane of the stop device (10), while the second lateral surface (10‴) includes ribs (13) arranged in such a position, configured and sized in such a way that the ribs (13) of a stop device (10) can be coupled by interlocking with the recesses (12) of a second stop device (10) so as to create a modular structure, in which preferably the ribs (13) have a T-shaped section and the recesses (12) are open downwards or upwards, so that the insertion of the ribs (13) occurs along a vertical direction.

7. The secondary support (1) according to any one of claims 1 to 6, wherein the second surface (4) of the stop device (10), which constitutes the lower surface facing the base or support surface of the device, comprises a plurality of ribs (14), on each of which a plurality of teeth (15) is arranged which facilitate gripping to a base surface on which the stop device (10) is arranged.

8. The secondary support (1) according to any one of claims 1 to 7, wherein the stop device (10) includes through holes (16) arranged in seats (17) extending from the second surface (4) of the device, in order to allow fixing by screwing of the stop device (10) onto a support surface, and/or the seat (17) includes a high-grip insert (18).

9. The secondary support (1) according to any one of claims 1 to 8, wherein the stop device (10) includes one or more openings (18) or recesses at the rear end (3b) of the inclined surface (3), so as to act as handles to hold the stop device (10) during use.

10. The secondary support (1) according to any one of claims 1 to 9, wherein the connecting element (7) has the shape of a strip or ribbon and is made of a material of lower hardness than the hardness of the material in which the stop device (10) is made, the connecting element (7) being preferably made of plastic material, foamed or non-foamed, rubber, cardboard or similar.

11. The secondary support (101) according to any one of claims 1 to 3, wherein the stop device (110) comprises two wedge-shaped elements (102) having converging inclined surfaces (103), the two wedge-shaped elements being separated by side walls (120) so as to define, between said wedge-shaped elements (102), an opening (106) configured for the insertion of the connecting element (107).

12. The secondary support (101) according to claim 11, wherein the wedge-shaped elements (102) comprise respectively said second surfaces (104), facing each other and separated by said opening (106), which include said toothing (105) arranged transversally with respect to the axis (X-X) of insertion of the connecting element (107).

13. The secondary support (101) according to any one of claims 11 to 12, wherein the connecting element (107) is formed by a tubular element with a square or rectangular section, sized so as to fit into the opening (106) of the stop devices (110) and made of a soft plastic, expanded or unexpanded, or of cardboard, preferably cardboard.

14. A retaining device (10, 110) as defined in any one of the preceding claims.
